# EUROPÄISCHE PATENTANMELDUNG

(11) **EP 1 939 561 A2**
(43) Veröffentlichungstag der Anmeldung: **02.07.2008**
(21) Anmeldenummer: 07121848.1
(22) Anmeldetag: 29.11.2007
(51) Int. Cl.: F25D 25/04

(54) **Kompaktlagersystem und dessen Verwendung**

(30) Priorität: 07.12.2006 CH 19932006
(71) Anmelder: Tecan Trading AG, 8708 Männedorf (CH)
(72) Erfinder: Chachelin, Christian, 3532, Zäziwil (CH); Iseli, Bernhard, 3284, Fräschels (CH); Reisch, Dietmar, 3600, Thun (CH); Steck, Jürg, 3422, Kirchberg (CH); Stucki, Thomas, 3510, Konolfingen (CH); Zellweger, Lorenz, 3600 Thun (CH); Wasserfallen, André, 3661 Uetendorf (CH)
(74) Vertreter: OK pat AG

(57) **Zusammenfassung**

Betrifft ein Kompaktlagersystem (1) und ein entsprechendes Verfahren zu Lagern von gefrorenen Proben in einem Kompaktlagersystem (1) mit einem Lagerbereich (2), mit einem eine Wärmeisolation (9) umfassenden Gehäuse (8) sowie mit zumindest einem Kühlaggregat (10), mit welchem zumindest der Lagerbereich (2) mindestes auf -15°C kühlbar ist. Dieses Kompaktlagersystem umfasst (1) vollständig innerhalb des gekühlten Lagerbereichs (2) angeordnete Lagerregale (5) und einen oberhalb dieses Lagerbereichs (2) angeordneten Transferbereich (6), in welchem ein Roboter (7) im wesentlichen horizontal beweglich angeordnet ist. Das Kompaktlagersystem ist dadurch gekennzeichnet, dass es mindestens eine im wesentlichen vertikale Paternostereinrichtung (3) mit einer Vielzahl von im wesentlichen horizontal ausgerichteten, auf einer im wesentlichen ovalen Bahn umlaufenden Lagerregalen (5) umfasst. Der mit einer Paternostereinrichtung (3) zusammenwirkende Roboter (7) ist zum Entnehmen oder Einlegen eines Lagerregals (5) bzw. von Gegenständen aus einem bzw. in ein Lagerregal (5) ausgebildet. Er ist zu diesen Tätigkeiten befähigt, wenn zumindest ein Lagerregal (5) im Bereich des oberen Umlaufhalbkreises dieser Paternostereinrichtung (3) positioniert ist.

## Beschreibung

Die vorliegende Erfindung betrifft gemäss dem Oberbegriff des unabhängigen Anspruchs 1 ein Kompaktlagersystem mit einem Lagerbereich, mit einem eine Wärmeisolation umfassenden Gehäuse sowie mit zumindest einem Kühlaggregat, mit welchem zumindest der Lagerbereich auf eine Temperatur kühlbar ist, die unterhalb von -15°C liegt. Dabei umfasst das Kompaktlagersystem vollständig innerhalb des gekühlten Lagerbereichs angeordnete Lagerregale und einen oberhalb dieses Lagerbereichs angeordneten Transferbereich, in welchem ein Roboter im wesentlichen horizontal beweglich angeordnet ist. Zudem betrifft die vorliegende Erfindung ein Verfahren zum Lagern von gefrorenen Proben in einem entsprechenden Kompaktlagersystem.

Biologische Proben, wie Körperflüssigkeiten (wie z.B. Blut, Urin, Speichel oder Sperma), Zellen (wie z.B. Bakterienkulturen) oder Gewebeproben sind sehr temperaturempfindlich und müssen nach deren Gewinnung gekühlt aufbewahrt werden damit sie nicht verderben. Ein wesentlicher Aspekt bei der Untersuchung von biologischen und allgemein temperaturempfindlichen Proben ist somit das Lagern und Bereitstellen dieser Proben in gefrorenem Zustand, d.h. bei tiefen Temperaturen. Dies kann beispielsweise in Tiefgefriergeräten (d.h. bei Temperaturen von höchstens -18°C), in einer mittels Trockeneis (festem CO₂) gekühlten Gasatmosphäre (d.h. bei -78.5°C) oder in flüssigem Stickstoff (bei -196°C) geschehen. Zudem sind Anlagen für die mechanische Kälteerzeugung mittels Kompressoren bekannt, welche je nach Ausführungsform eine Minimaltemperatur von -35°C (einstufige Ausführung), -85°C (zweistufige Ausführung) oder -135°C (dreistufige Ausführung) erreichen können. Alle diese Lagerarten sind seit langem bekannt und haben ihre spezifischen Vor- und Nachteile. Bei -18°C aufbewahrte Proben können schon nach kurzer Zeit Zerstörungsmerkmale wegen sich bildenden Eiskristallen zeigen. Diese Eiskristallbildung ist bei Trockeneistemperaturen erheblich reduziert und findet im flüssigen Stickstoff praktisch nicht statt. Allerdings wärmen sich mit Trockeneis gekühlte Behälter recht schnell auf, wenn alles CO₂ wegsublimiert ist und die Aufbewahrung von Proben in Flüssigstickstoff ist umständlich und nur mit speziellen Schutzmassnahmen für das Personal möglich. Insbesondere zum robotisierten bzw. automatisierten Aufbewahren und Bereitstellen von sehr vielen Proben eignen sich nur wenige der bekannten Systeme.

Aus dem Patent US 6,357,983 B1 ist ein automatisches Lagersystem bekannt. In einer Klimakammer, deren Temperatur im Bereich von -20°C bis +20°C gewählt werden kann, befinden sich zwei um eine zentrale Achse drehbare, ineinander geschachtelte ringförmige Gestelle mit eine Vielzahl von horizontal ausgerichteten, übereinander angeordneten Tablarpositionen. Diese Tablarpositionen können von einem sich vertikal und ausserhalb der Gestelle bewegenden Roboter beschickt werden. Dieser Roboter ist mit einem speziell artikulierten Greifermechanismus bestückt, damit er auch die inneren Tablarpositionen erreichen kann, indem er jeweils durch ein äusseres Tablar hindurch reicht. Dieses System hat den Vorteil, dass sich der Roboter und damit die Probe während des ganzen Auswahlvorganges in einer kalten Atmosphäre befindet und über eine Schleuse dem Lagersystem entnommen werden kann. Allerdings erscheint dieses Lagersystem in seiner Anzahl von Tablargestellen limitiert, so dass für eine verhältnismässig kleine Anzahl von Proben ein relativ grosses Volumen gekühlt und ein eher komplizierter Roboter verwendet werden muss.

Ein anderes Lagersystem ist aus dem Patent US 6,694,767 B2 bekannt. Unterhalb eines Arbeitsbereichs mit kontrollierter Atmosphäre, in welchem ein Roboter mit Arbeitsplatz angeordnet ist, befindet sich ein rundum wärmeisolierter Lagerraum der für Temperaturen von -85°C bis -80°C ausgelegt ist. Lagergestelle mit relativ kleinen horizontalen Abmessungen und vielen übereinander angeordneten Tablaren sind senkrecht in Öffnungen der wärmeisolierten Decke eingehängt und weisen einen oberen Deckel auf, mit dem sie in eingesetztem Zustand die wärmeisolierte Zone dieses Lagerraums verschliessen. Ein Roboter hievt ein solches Lagergestell soweit aus dem Lagerraum heraus, dass ein Greifer einen Probenbehälter aus einer Gestellposition herausziehen kann. Wenn auch beim Herausziehen der Gestelle aus dem Lagerraum die Gefahr des Erwärmens oder sogar Auftauens der Proben besteht, so wird doch mit einer kontrollierten CO₂-Atmosphäre verhindert, dass sich Wasserdampf auf den kalten Oberflächen der Probenbehälter niederschlägt.

Der Zeitbedarf zum Bereitstellen eines Probenbehälters in diesen bekannten Lagersystem erscheint vor allem dann zu hoch, wenn eine grosse Anzahl von Proben in sehr kurzer Zeit bereitgestellt werden muss.

Ein weiteres Lagersystem zum Aufbewahren und Bereitstellen von gefrorenen Proben ist aus der Patentanmeldung JP 2004 131 249 bekannt. Dieses Dokument offenbart einen Lagerraum mit Umlaufgestellen, von denen jedes eine Vielzahl von Tablaren mit relativ kleiner Fläche umfasst. Zwei dieser Umlaufgestelle oder horizontalen Paternostereinrichtungen sind in einem Kühlraum angeordnet, welcher durch eine von zwei Öffnungen unterbrochene Wand von einem Roboterraum getrennt ist. Ein Roboter entnimmt dem sich jeweils am nächsten der einen Öffnung befindenden Umlaufgestell einen Probenbehälter aus einer bestimmten Gestellposition und übergibt diesen Behälter einem zweiten Roboter oder einer Schleusenposition auf der dem Lagerraum gegenüberliegenden Seite. Der Behälter kann mit einer Kamera identifiziert werden. Der Lagerraum dieses Systems erscheint relativ kompakt, allerdings benötigt der Roboter noch sehr viel Raum, insbesondere dann, wenn zwei Roboter zum Bereitstellen bzw. Umlagern der Proben von einem Probenbehälter in einen anderen verwendet werden sollen.

Ein Lagersystem mit einer Mehrzahl von vertikalen Paternosterregalen, die von zumindest einem, oberhalb diesen Regalen angeordneten Roboter bedient werden, ist aus dem Patent CH 688 821 A5 bekannt. Der Roboter entnimmt jeweils einen Lagerbehälter dem obersten Regal. Die Lagerung der Güter erfolgt in einem sehr kompakten und gut ausgenutzten Lagerraum mit nicht spezifizierter Temperatur. Für die speditive Bereitstellung von vielen Behältern erscheinen die Wege des Roboters als sehr lang, zumal immer nur ein Behälter bzw. Gegenstand transportiert werden kann.

Zudem sind Lagersysteme der Firma Remp AG (Oberdiessbach, Schweiz) bekannt, in denen Proben beispielsweise im System REMP Small-Size Store^{TM} bei Temperaturen von +4°C oder -20°C oder im System REMP Bio-Sample Store bei -80°C gelagert werden können. Dabei wird im letzteren ein Roboter eingesetzt, der bei -20°C arbeitet.

Die Aufgabe der vorliegenden Erfindung bestand darin, ein alternatives Lagersystem für gefrorene Proben vorzuschlagen, das aus dem Stand der Technik bekannte Nachteile beseitigt oder zumindest minimiert.

Diese Aufgabe wird gemäss einem ersten Aspekt mit einem Kompaktlagersystem gelöst, das die Merkmale des unabhängigen Anspruchs 1 umfasst. Somit wird ein Kompaktlagersystem mit einem Lagerbereich, mit einem eine Wärmeisolation umfassenden Gehäuse sowie mit zumindest einem Kühlaggregat vorgeschlagen. Mit diesem Kühlaggregat ist zumindest der Lagerbereich auf eine Temperatur kühlbar, die unterhalb von -15°C liegt. Dieses Kompaktlagersystem umfasst vollständig innerhalb des gekühlten Lagerbereichs angeordnete Lagerregale und einen oberhalb dieses Lagerbereichs angeordneten Transferbereich, in welchem ein Roboter im wesentlichen horizontal beweglich angeordnet ist. Das erfindungsgemässe Kompaktlagersystem ist dadurch gekennzeichnet, dass es mindestens eine, im Lagerbereich angeordnete und zumindest im wesentlichen vertikale Paternostereinrichtung umfasst, welche eine Längsachse und eine Vielzahl von im wesentlichen horizontal ausgerichteten, auf einer im wesentlichen ovalen Bahn umlaufenden Lagerregalen umfasst, wobei der mit einer Paternostereinrichtung zusammenwirkende Roboter zum Entnehmen oder Einlegen eines Lagerregals bzw. von Gegenständen aus einem bzw. in ein Lagerregal ausgebildet und dazu befähigt ist, wenn zumindest ein Lagerregal im Bereich des oberen Umlaufhalbkreises dieser Paternostereinrichtung positioniert ist, wobei diese Gegenstände ausgewählt sind aus einer Gruppe, die Transferträger, Behälterracks und Behälter umfasst.

Diese Aufgabe wird gemäss einem zweiten Aspekt mit einem Verfahren zum Lagern und Bereitstellen von gefrorenen Proben in einem solchen Kompaktlagersystem gelöst. Das erfindungsgemässe Verfahren ist dadurch gekennzeichnet, dass die gefrorenen Proben in mindestens einer, im Lagerbereich des Kompaktlagersystems angeordneten und zumindest im wesentlichen vertikalen, Paternostereinrichtung mit einer Längsachse und einer Vielzahl von im wesentlichen horizontal ausgerichteten, auf einer im wesentlichen ovalen Bahn umlaufenden Lagerregalen gelagert oder daraus bereitgestellt werden, wobei der mit einer Paternostereinrichtung zusammenwirkende Roboter ein Lagerregal entnimmt oder einlegt bzw. Gegenstände aus einem Lagerregal nimmt bzw. in ein Lagerregal legt, wenn zumindest ein Lagerregal im Bereich des oberen Umlaufhalbkreises dieser Paternostereinrichtung positioniert ist, wobei diese Gegenstände ausgewählt sind aus einer Gruppe, die Transferträger, Behälterracks und Behälter umfasst.

Zusätzliche bevorzugte und erfinderische Merkmale ergeben sich jeweils aus den abhängigen Ansprüchen.

Im Zusammenhang mit der vorliegenden Erfindung wird der geometrische Begriff "oval" als eine in sich geschlossene, im wesentlichen 0-förmige Linie verstanden. Bei einem solchen Oval erstrecken sich zwei zumindest im wesentlichen gleich lange und gerade Teile praktisch parallel zu einander. Die beiden benachbarten Enden ihrer geraden Teile sind untereinander jeweils über einen zumindest annähernden Halbkreis miteinander verbunden.

Die vorliegende Erfindung wird nun an Hand von beispielhaften Ausführungsformen und schematischen, den Umfang der Erfindung nicht einschränkenden Zeichnungen näher erläutert. Dabei zeigt:
- Fig. 1: einen vertikalen Längsschnitt durch ein Kompaktlagersystem gemäss einer ersten Ausführungsform;
- Fig. 2: einen Grundriss des Kompaktlagersystems in Fig. 1;

- Fig. 3: einen vertikalen Längsschnitt durch ein Kompaktlagersystem gemäss einer zweiten Ausführungsform;
- Fig. 4: eine schematisierte 3D-Ansicht eines Lager- oder Arbeitsmagazins;
- Fig. 5: einen vertikalen Schnitt durch eine Umlagerstation, in welcher ein Puncher einen Probenbehälter aus einem Kompartiment eines Lagermagazins in ein Kompartiment eines Arbeitsmagazins stösst;
- Fig. 6: 3D-Ansichten von Paternostereinrichtungen mit zwei Hauptkettentrieben und mit einem Gerüst, wobei:
Fig. 6A eine erste Variante mit einem stabilisierenden Seitenkettentrieb, und
Fig. 6B eine zweite Variante mit einer stabilisierenden Kurvenscheibe zeigt;
- Fig. 7: eine vergrösserte 3D-Ansicht von Fig. 6A, in welcher der seitliche und der axiale Versatz des einen Hauptkettentriebs in Bezug auf den Seitenkettentrieb gut zu sehen sind;
- Fig. 8: eine 3D-Ansicht eines Roboters mit zwei Greifrahmen, zwei Köpfen und einer Umlagerstation.

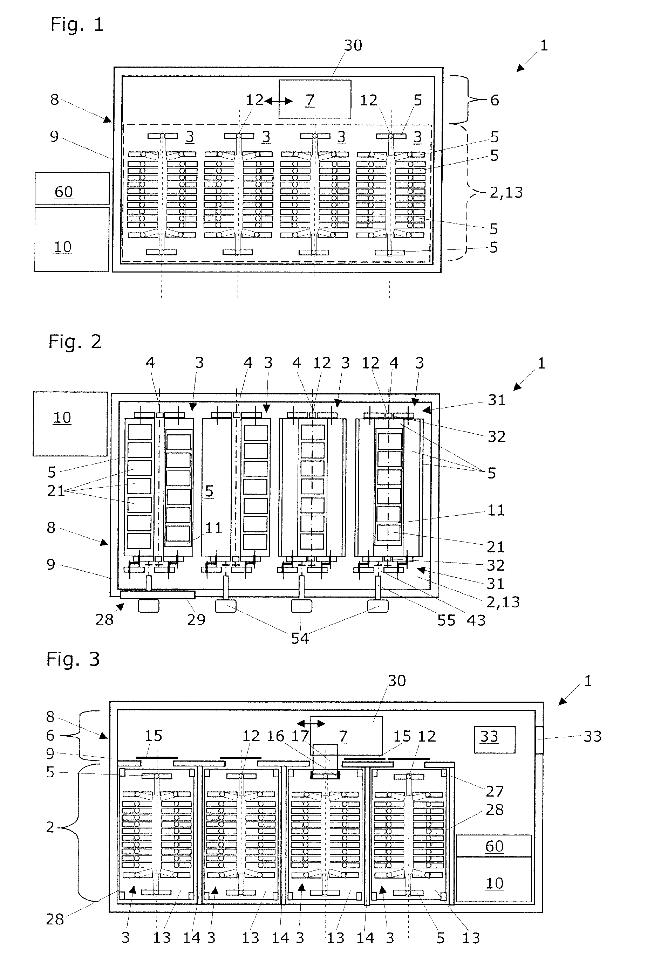

Die Figur 1 zeigt einen vertikalen Längsschnitt durch ein Kompaktlagersystem 1 gemäss einer ersten Ausführungsform. Dieses Kompaktlagersystem 1 umfasst einen Lagerbereich 2, der in einem mit einer Wärmeisolation 9 versehenen Gehäuse 8 angeordnet ist. Zudem umfasst dieses Kompaktlagersystem 1 zumindest ein Kühlaggregat 10, mit welchem zumindest der Lagerbereich 2 auf eine Temperatur kühlbar ist, die unterhalb von -15°C liegt. Das Kühlaggregat 10 kann innerhalb des Gehäuses (vgl. Fig. 3) oder, wie hier gezeigt, ausserhalb des Gehäuses 8 angeordnet sein. Das Kompaktlagersystem 1 umfasst Lagerregale 5, die vollständig und unabhängig von ihrer Lagerposition innerhalb des gekühlten Lagerbereichs 2 angeordnet sind. Oberhalb dieses Lagerbereichs 2 ist innerhalb des Gehäuses 8 ein Transferbereich 6 angeordnet, in welchem ein Roboter 7 im wesentlichen horizontal beweglich untergebracht ist (vgl. Doppelpfeil in den Figuren 1 und 3).

Das erfindungsgemässe Kompaktlagersystem 1 umfasst mindestens eine, im Lagerbereich 2 angeordnete und zumindest im wesentlichen vertikale Paternostereinrichtung 3. Diese Patenostereinrichtung umfasst eine Längsachse 4 und eine Vielzahl von im wesentlichen horizontal ausgerichteten, auf einer im wesentlichen ovalen Bahn umlaufenden Lagerregalen 5. Der mit einer solchen Paternostereinrichtung 3 zusammenwirkende Roboter 7 ist zum Entnehmen oder Einlegen eines Lagerregals 5 ausgebildet. Er ist zudem zum Entnehmen oder Einlegen von Gegenständen aus einem bzw. in ein Lagerregal 5 ausgebildet. Der Roboter 7 ist wegen der Interaktion mit der Paternostereinrichtung 3 jedoch nur zu diesen Aktionen befähigt, wenn zumindest ein Lagerregal 5 im Bereich des oberen Umlaufhalbkreises dieser Paternostereinrichtung 3 positioniert ist. Dabei sind diese Gegenstände ausgewählt aus einer Gruppe, die Transferträger 11, Behälterracks 21 und Behälter 17 umfasst.

Als "Behälter oder Probenbehälter" werden Probenröhrchen bezeichnet, die beispielsweise aus Glas oder Kunststoff hergestellt sind. Probenröhrchen umfassen auch sogenannte "Vials" und "Tubes". Insbesondere Vials und Tubes sind im wesentlichen zylindrisch ausgebildet und werden bevorzugt in Magazinen oder "Racks" aufbewahrt oder transportiert. Besonders bevorzugt sind dabei Behälterracks 21, welche im wesentlichen die gleiche Standfläche wie eine Mikroplatte aufweisen. Der Begriff "Behälter" umfasst aber auch alle anderen Gefässe, die geeignet sind, Flüssigkeiten, Feststoffe oder Gemische von Flüssigkeiten und Feststoffen einzuschliessen. Beispielsweise sind Fläschchen mit Deckeln solche Behälter, dabei können diese Fläschchen aus Glas oder Kunststoff hergestellt sein und die Deckel beispielsweise als Schraubdeckel, Klemmdeckel, Stopfen ausgebildet sein. Behälter mit Folienverschluss werden hier ebenfalls eingeschlossen.

In robotisierten Laboratorien sind sogenannte "Micro-Tube Cluster Racks" speziell bevorzugt, weil diese eine Standfläche aufweisen, welche dem sogenannten "Foot Print" einer Mikroplatte nach dem SBS-Standard (SBS = Society for Biomolecular Screening) entspricht und deshalb oft als "SBS Footprint" bezeichnet wird. Inzwischen wurde dieser Standard vom ANSI (American National Standards Institute) als ANSI/SBS 1-2004 normiert. Racks mit 96 Mikro-Röhrchen sind bekannt. Die bereits genannte Firma Remp AG vertreibt ebenfalls Micro-Tube Cluster Racks mit 96 oder 384 Mikro-Röhrchen unter dem Handelsnahmen REMP Tube Technology^{TM}.

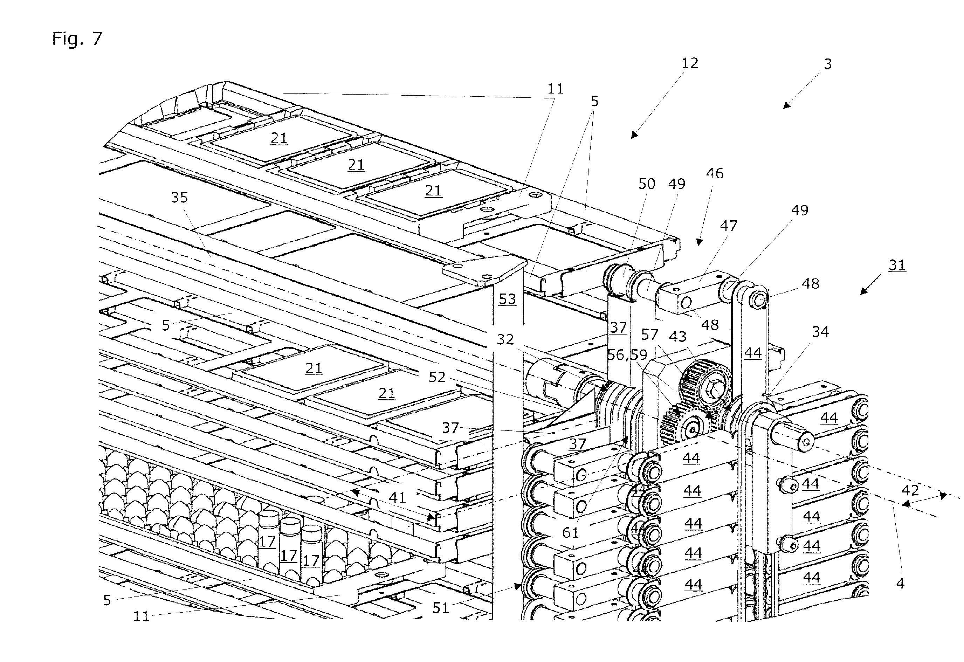

Solche Behälterracks 21 können direkt auf den Lagerregalen 5 abgelegt werden. Bevorzugt weisen die Lagerregale entsprechende Vertiefungen bzw. Abteile auf (vgl. Fig. 7), die ein Verrutschen der Behälterracks 21 auf den Lagerregalen 5 verhindern und so die Position eines Behälterracks auf einem Lagerregal eindeutig definieren. Derartig klar positionierte Behälterracks können vom Roboter 7 angefahren und zielsicher ergriffen werden, wenn zumindest ein Lagerregal 5 im Bereich des oberen Umlaufhalbkreises dieser Paternostereinrichtung 3 positioniert ist. Lagerregale werden bevorzugt aus Aluminiumblech oder Chromstahlblech hergestellt. Insbesondere das Aluminium ist ein guter Wärmeleiter und solche Aluminiumregale sind verhältnismässig leicht und trotzdem genügend stabil.

Solche Behälterracks 21 können aber auch auf einem Transferträger 11 abgelegt werden, welcher ebenfalls entsprechende Vertiefungen bzw. Abteile aufweist (vgl. Fig. 7), die ein Verrutschen der Behälterracks 21 auf den Transferträgern 11 verhindern und so die Position eines Behälterracks auf einem Transferträger eindeutig definieren. Diese Transferträger 11 sind vorzugsweise etwas kürzer als die Lagerregale 5 und können auf diesen positionsgenau abgelegt werden (vgl. Fig. 7). Die Transferträger 11 sind vorzugsweise aus einem Kunststoff gefertigt. An Stelle der Vertiefungen bzw. Abteile für die Behälterracks 21 können die Transferträger 11 auch ein Array von Pylonen umfassen, zwischen denen Probenröhrchen oder andere Behälter 17 eingesteckt werden können (vgl. Fig. 7). Auch Behälterracks 21 können solche Pylone umfassen, so dass Vials und Probenröhrchen in von Hand oder roboterisiert in diese Behälterracks 21 eingesetzt bzw. aus diesen entfernt werden können.

Es kann auch vorgesehen sein, dass der mit einer Paternostereinrichtung 3 zusammenwirkende Roboter 7 zum Entnehmen oder Einlegen eines Lagerregals 5 bzw. von Gegenständen aus einem bzw. in ein Lagerregal 5 ausgebildet und dazu befähigt ist, wenn dieses Lagerregal 5 zumindest nahe am oberen Wendepunkt 12 der Paternostereinrichtung 3 positioniert ist. Je höher die Position der zu entnehmenden Gegenstände ist, desto einfacher können diese vom Greifer bzw. von der Greiferzange 20 des Roboters 7 erfasst werden. Alternativ dazu kann vorgesehen sein, dass der mit einer Paternostereinrichtung 3 zusammenwirkende Roboter 7 zum Entnehmen oder Einlegen eines Lagerregals 5 bzw. von Gegenständen aus einem bzw. in ein Lagerregal 5 ausgebildet und dazu befähigt ist, wenn zwei Lagerregale 5 vom oberen Wendepunkt 12 der Paternostereinrichtung 3 um jeweils im wesentlichen einen Viertel des oberen Umlaufhalbkreises entfernt positioniert sind. Diese alternative Präsentationsart hat den Vorteil, dass pro Paternostereinrichtung gleichzeitig zwei Lagerregale für den Roboter 7 zugänglich positioniert werden können.

Es kann eine einzige Paternostereinrichtung 3 (nicht gezeigt), es können aber auch zwei oder mehr Paternostereinrichtungen 3 (z.B. vier, wie in Fig. 1 gezeigt), in einem einzigen Lagerraum 13 angeordnet werden. Wenn mindestens zwei Paternostereinrichtungen 3 vorgesehen sind, werden die Paternostereinrichtungen 3 bevorzugt im wesentlichen parallel nebeneinander angeordnet, wobei der Roboter 7 dann vorzugsweise quer zu den Längsachsen 4 dieser Paternostereinrichtungen 3 verfahrbar ausgebildet ist. Dies ist aus der Kombination der beiden Figuren 1 und 2 ersichtlich, dabei zeigt die Figur 2 einen Grundriss des in Figur 1 im Vertikalschnitt gezeigten Kompaktlagersystems 1 gemäss der einfacheren, ersten Ausführungsform.

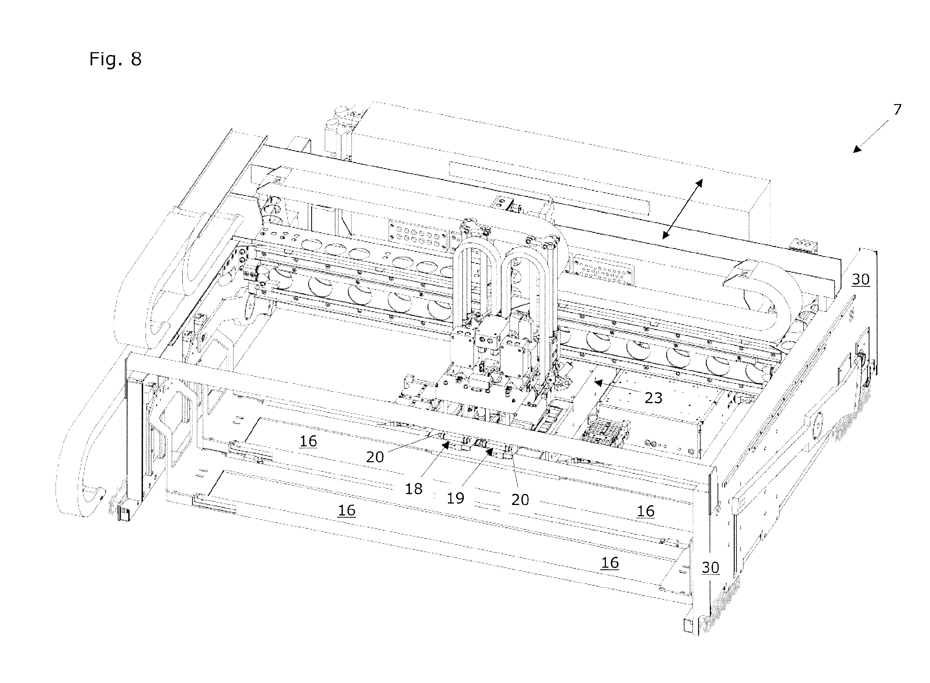

In der Figur 3, welche einen vertikalen Längsschnitt durch ein Kompaktlagersystem gemäss einer zweiten Ausführungsform zeigt, ist eine bevorzugte Weiterbildung des erfindungsgemässen Kompaktlagersystems 1 dargestellt. Der Lagerbereich 2 dieses Kompaktlagersystems 1 umfasst Lagerräume 13, die permanent voneinander durch wärmeisolierte Zwischenwände 14 getrennt sind. Dabei ist in jedem Lagerraum 13 je eine Paternostereinrichtung 3 angeordnet. Auch hier werden die Paternostereinrichtungen 3 bevorzugt im wesentlichen parallel nebeneinander angeordnet und der Roboter 7 ist quer zu den Längsachsen 4 dieser Paternostereinrichtungen 3 verfahrbar ausgebildet. Die Temperatur in allen diesen thermisch voneinander getrennten Lagerräumen 13 kann - je nach Erfordernis - gleich oder unterschiedlich sein. Bevorzugt umfasst der Roboter 7 zumindest einen Greifrahmen 16 zum Blockieren einer Paternostereinrichtung 3 und zum Entnehmen bzw. Einlegen eines Transferträgers 11 aus einem Lagerregal 5 oder zum Entnehmen bzw. Einlegen eines Lagerregals 5 der blockierten Paternostereinrichtung 3 (vgl. auch Fig. 8). Abweichend von dieser Darstellung kann vorgesehen sein, dass ähnlich isolierte, aber herausnehmbare Zwischenwände (sog. "mobile Schottwände", nicht dargestellt) nur dann beidseits einer Paternostereinrichtung 3 eingesetzt werden, wenn an dieser Paternostereinrichtung 3 besondere Arbeiten, wie Entpannungs- oder Servicearbeiten ausgeführt werden sollen bzw., wenn diese Paternostereinrichtung 3 aus dem Lagerbereich 2 des Kompaktlagersystems 1 zumindest temporär entfernt oder gegen eine andere Paternostereinrichtung 3 ausgetauscht werden soll.

Es wird besonders bevorzugt, dass jeder Lagerraum 13 zumindest eine verschliessbare Ladeluke 15 umfasst. Damit können die Lagerräume völlig von einander thermisch isoliert werden. Somit kann ein einzelner Lagerraum 13 beispielsweise für Wartungsarbeiten aufgetaut werden, ohne dass die Funktionsfähigkeit der anderen Lagerräume 13 oder gar des Kompaktlagersystems 1 beeinträchtig wäre.

Insbesondere bei der zweiten, aber auch bei der ersten Ausführungsform ist der Lagerbereich 2 bevorzugt auf eine Temperatur kühlbar, die bei -35°C oder darunter liegt. Zudem soll der Transferbereich 6 auf eine Temperatur kühlbar sein, die unterhalb von -15°C liegt. Dieser Temperaturunterschied beeinträchtigt normalerweise die Qualität der gefrorenen Proben nicht, weil diese in einem geschlossenen Behälter 17, mit oder ohne Behälterrack 21 bzw. Transferträger 11 vom zumindest auf -15°C vorgekühlten Robotergreifer 20 erfasst und in ein vom Roboter 7 gehaltenes, ebenfalls auf -15°C vorgekühltes Behälterrack 21, einen Transferträger 11 oder ein Lagerregal 5 transferiert werden können.

Bei einer besonders bevorzugten Ausführungsform des Kompaktlagersystems 1 ist der Lagerbereich 2 auf eine Temperatur kühlbar, die bei -80°C liegt. Dabei ist der Transferbereich 6 vorzugsweise auf eine Temperatur kühlbar, die bei -20°C liegt. Diese Temperaturen können, wie eingangs beschrieben, mit einem Kühlaggregat 10 erzeugt werden, das beispielsweise einen Kompressor umfasst, dessen erste Stufe die Temperatur von -20°C für den Transferbereich 6 und dessen erste und zweite Stufe die Temperatur von -80°C für den Lagerbereich 2 bereitstellt.

Das Kompaktlagersystem 1 umfasst vorzugsweise zumindest eine Schleuse 33, welche zum Einbringen und/oder Herausnehmen von Lagerregalen 5, Transferträgern 11, Lagermagazinen bzw. Behälterracks 21 mit Probenbehältern in Form von Vials 17, Tubes 22 oder anderen Behältern, wie z.B. Gläschen mit Schraubdeckeln und von Arbeitsmagazinen 24 in das Kompaktlagersystem 1 hinein und/oder von diesem heraus ausgebildet ist.

Jede Paternostereinrichtung 3 ist vorzugsweise in einem Gerüst 27 aufgebaut und kann zusammen mit diesem Gerüst 27 seitlich durch eine Öffnung 28 aus dem Gehäuse 8 des Kompaktlagersystems 1 herausgezogen werden. Damit keine Kältebrücke entstehen kann, ist diese Öffnung 28 bei eingeschobener Paternostereinrichtung 3 mit einem mit einer Wärmeisolation 9 ausgerüsteten Deckel 29 verschlossen (vgl. Fig. 2). Dieser Deckel 29 kann am Gerüst 27 befestigt sein, so dass er zusammen mit der Paternostereinrichtung 3 vom Kompaktlagersystem 1 entfernt wird. Der Deckel 29 kann aber auch als Türe ausgebildet und am Gehäuse 8 des Kompaktlagersystems 1 befestigt sein. Jede Paternostereinrichtung 3 umfasst vorzugsweise einen ausserhalb des Lagerbereichs 2 angeordneten Antriebsmotor 54, der über eine wärmeisolierte Drehdurchführung 55 mit dem Seitenkettentrieb 43 verbunden ist. Bei einer Temperatur des Lagerbereichs 2 von -20°C können die Antriebsmotoren 54 aber auch innerhalb dieses Lagerbereichs 2 angeordnet werden.

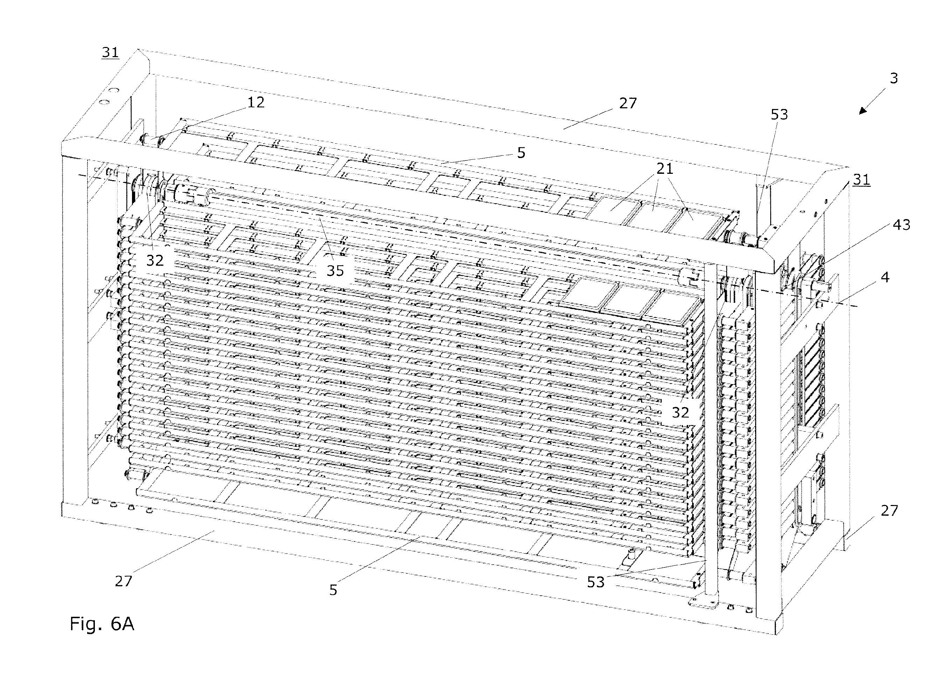

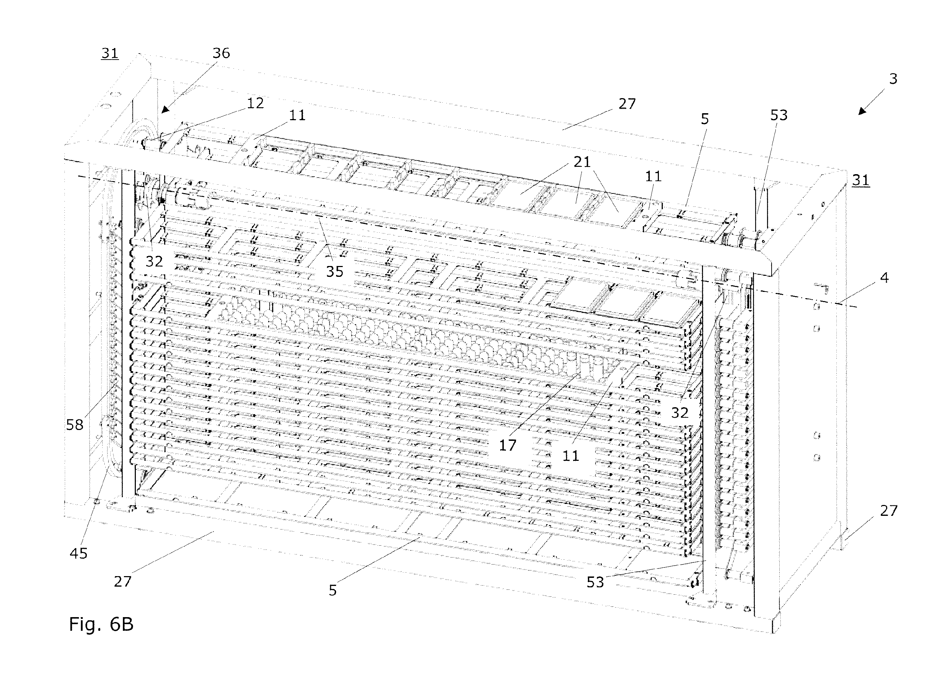

Die Figuren 6A und 6B zeigen 3D-Ansichten von Paternostereinrichtungen 3 mit zwei Hauptkettentrieben 32 und mit einem solchen Gerüst 27. Jede Paternostereinrichtung 3 umfasst zwei an deren beiden Stirnseiten 31 angeordnete, im wesentlichen vertikale Hauptkettentriebe 32 mit Rollenketten. Diese Rollenketten laufen um untere und obere Kettenräder 34. Die Hauptkettentriebe 32 sind über zumindest eine Welle 35 mechanisch miteinander verbunden. Dabei sind benachbarte Kettenglieder dieser Rollenketten mittels als Regalträger 37 ausgebildeten Laschen miteinander verbunden. Diese Regalträger 37 sind vorzugsweise jeweils von den Kettenbolzen durchstossen. Jeder Hauptkettentrieb 32 umfasst dabei vorzugsweise zwei parallele Rollenketten, deren Kettenglieder von je einem, bevorzugt U-förmigen, Regalträger 37 umschlossen sind. Als zusätzliche Stabilisation der Rollenketten der Hauptkettentriebe 32 können parallel dazu weitere, an sich nicht belastete Stützketten 61 angeordnet werden (vgl. auch Fig. 7). Bevorzugt umfasst jeder Hauptkettentrieb 32 eine zusätzliche, parallele Stützkette 61, deren Kettenglieder von den Regalträgern 37 nicht umschlossen sind.

Die Figur 6A zeigt eine erste Variante einer solchen Paternostereinrichtung 3, die durch einen stabilisierenden Seitenkettentrieb 43 gekennzeichnet ist. Dieser Seitenkettentrieb 43 verhindert ein Kippen der Lagerregale 5 und gewährleistet eine zumindest annähern horizontale Lage der Lagerregale 5 auf ihrem ganzen Weg in der Paternostereinrichtung 3. Dabei kann diese erfindungsgemässe Paternostereinrichtung 3 mit den im wesentlichen horizontal gehaltenen Lagerregalen 5 sowohl vorwärts als auch rückwärts laufend betrieben werden. Jede Paternostereinrichtung 3 gemäss dieser ersten Variante umfasst einen an deren einen Stirnseite 31 angeordneten, im wesentlichen vertikalen Seitenkettentrieb 43 mit Rollenketten (vgl. auch Fig. 7). Diese Rollenketten des Seitenkettentriebs 43 laufen um untere und obere Kettenräder 34 und sind gegenüber dem Hauptkettentrieb 32 um ein axiales Versatzmass 41 und um ein seitliches Versatzmass 42 versetzt. Dabei sind benachbarte Kettenglieder mittels als Blindträger 44 ausgebildete Laschen miteinander verbunden. Jeder Seitenkettentrieb 43 umfasst vorzugsweise eine Rollenkette, deren Kettenglieder von je einem U-förmigen Blindträger 44 umschlossen sind. Vorzugsweise sind diese Regalträger 37 oder diese Blindträger 44 von den jeweiligen Kettenbolzen durchstossen. Ebenso wird bevorzugt, dass jeder Regalträger 37 über eine das axiale Versatzmass 41 und das seitliche Versatzmass 42 überbrückende, in sich steife Verbindung 46 mit einem Blindträger 44 gelenkig verbunden ist. In dieser gezeigten Ausführung der ersten Variante der Paternostereinrichtung 5 ist zumindest ein Antriebszahnrad 56 des Hauptkettentriebs 32 über ein Zwischenzahnrad 57 oder einen Zahnriemen (nicht gezeigt in Fig. 7) mit einem Antriebszahnrad 59 des Seitenkettentriebs 43 mechanisch wirkverbunden. Bevorzugt ist, dass die Verbindung 46 als Z-förmiges Element mit einem Längsteil 47 und zwei Querschenkeln 48 ausgebildet ist, wobei die Querschenkel 48 als Drehachsen ausgebildet sind, die drehbar in Hülsen 49 gelagert sind, welche an den Regalträgern 37 oder an den Blindträger 44 angeordnet sind (vgl. auch Fig. 7).

Es kann des Weiteren vorgesehen sein, dass die an den Regalträgern 37 angeordneten Hülsen 49 zudem Rollen 50 mit zwei umlaufenden Stegen 51 umfassen. Dabei definieren diese Stege 51 den genauen Abstand der Lagerregale 5, wobei diese Stege bevorzugt einen Aussendurchmesser aufweisen, welcher gerade dem Doppelten Mass der Teilung der Kette entspricht. In diesem Ausführungsbeispiel wurde eine Kettenteilung von 15.875 mm gewählt, so dass der Aussendurchmesser der Stege 51 jeweils 31.75 mm beträgt.

Ein Kompaktlagersystem 1 mit solchen Paternostereinrichtungen 5 ist bevorzugt zum Lagern von Lagermagazinen bzw. Behälterracks 21 ausgebildet, welche die Standfläche und normale Höhe einer Standardmikroplatte, oder welche dieselbe Standfläche aber ein ganzzahliges Mehrfaches dieser normalen Höhe aufweisen. Besonders bevorzugt wird ein solches Kompaktlagersystem 1, das mindestens drei Paternostereinrichtungen 3 und eine spezifische Lagerkapazität von mindestens 100 Standardmikroplatten pro m³ aufweist.

Jedes erfindungsgemässe Kompaktlagersystem 1 umfasst vorzugsweise einen zentralen Rechner 60 zum Regeln der Lagerbereich- und Transferbereichtemperatur und zum Steuern der Motoren 54 der Paternosterantriebe und des Roboters 7. Bevorzugt verfügt der Rechner 60 über eine Software, die diesen Rechner zum Ausführen eines zeitoptimierten Scheduling in Bezug auf die auszuführenden Arbeiten des Roboters 7 befähigt. Mit Hilfe von solchen Scheduling-Methoden können grosse Zahlen von Proben in kürzester Zeit in den Paternostereinrichtungen 5 abgelegt oder aus diesen Paternostereinrichtungen bereitgestellt werden. Zu solchen arbeiten zählen auch das Umformatieren von lose in Magazinen dem Roboter übergebenen Röhrchen von Drittherstellern. Ein zum Greifen einzelner solcher Röhrchen befähigter Roboter 7 ist dazu von grossem Vorteil. Solche Röhrchen von Drittherstellern können z.B. auf einem Transferträger 11 abgesetzt und mit diesem Transferträger 11 auf einem Lagerregal 5 abgelegt werden. Die Magazine der Dritthersteller und der Racks für Vials 17 können auch einen Footprint aufweisen, der von demjenigen des SBS-Standards abweicht. Ebenso kann der Roboter 7 auswechselbare Greifer umfassen, die für Behälter bzw. Racks passen, welche nicht dem SBS-Standard entsprechen.

Die Figur 6B zeigt eine zweite Variante einer solchen Paternostereinrichtung 3 mit einer stabilisierenden Kurvenscheibe 36. Jede dieser Paternostereinrichtungen 3 umfasst eine an deren einen Stirnseite 31 angeordnete, im wesentlichen vertikale Kurvenscheibe 36 mit einer Kurvenschiene 45 und Kurvenbügeln 58. Dabei ist jeder in sich formstabil ausgebildete Kurvenbügel 58 einem ein Lagerregal 5 tragenden Regalträger 37 zugeordnet und mit diesem gelenkig verbunden. Diese Kurvenscheibe 36 in Kombination mit einer dem Umlaufweg der Paternostereinrichtung entsprechenden, ovalen Kurvenschiene 45 und den Kurvenbügeln 58 verhindert ein Kippen der Lagerregale 5 und gewährleistet eine zumindest annähern horizontale Lage der Lagerregale 5 auf ihrem ganzen Weg in der Paternostereinrichtung 3. Auch diese erfindungsgemässe Paternostereinrichtung 3 kann mit den im wesentlichen horizontal gehaltenen Lagerregalen 5 sowohl vorwärts als auch rückwärts laufend betrieben werden.

Figur 7 zeigt eine vergrösserte 3D-Ansicht von Figur 6A. Hier ist der seitliche Versatz des einen Hauptkettentriebs 32 und der axiale Versatz dieses Hauptkettentriebs in Bezug auf den Seitenkettentrieb 43 gut zu sehen. Zudem ist gut sichtbar, dass die Regalträger 37 angeformte Stützen 52 umfassen können, welche die Regalträger 37 in einer im wesentlichen horizontalen Position gegenüber dem Hauptkettentrieb 32 zuverlässig abstützen. Bevorzugt umfasst jede Paternostereinrichtung 3 im wesentlichen vertikal angeordnete Leitschienen 53, welche zwischen den umlaufenden Stegen 51 der an den Regalträgern 37 angeordneten Rollen 50 eingreifen. Des weiteren sind hier die Röhrchen, bzw. Vials oder Behälter 17 von Drittherstellern gut zu sehen, wie diese auf einem Transferträger 11 zwischen dessen Pylonen abgesetzt und mit diesem Transferträger 11 auf einem Lagerregal 5 abgelegt sind.

Die Figur 8 zeigt eine 3D-Ansicht eines Roboters 7 mit zwei Greifrahmen 16, zwei Köpfen 18,19 und einer Umlagerstation 23. Der Roboter 7 umfasst zumindest einen, vorzugsweise aber zwei Köpfe 18,19. Dieser eine Kopf 18 ist bzw. diese zwei Köpfe 18,19 sind mit je einer Greiferzange 20 zum Greifen von Behälterracks 21 mit Probenbehältern 17 oder von Tubes 22 bzw. zum Greifen von in Behälterracks 21 oder in Transferträgern 11 angeordneten Probenbehältern 17 ausgerüstet. Vorzugsweise umfasst der Roboter 7 zudem eine Umlagerstation 23 zum Umverteilen dieser Probenbehälter 17,22 in Arbeitsmagazine 24. Der Roboter 7 ist vorzugsweise mit einer Greiferzange 20 ausgerüstet, mit welcher er Behälter 17 jeder Art, wie z.B. ganze Behälterracks 21 mit SBS Footprint, aber auch einzelne, vorzugsweise zylinderförmige Probenbehälter, wie Probenröhrchen und Vials fassen kann. Bevorzugt umfasst der Roboter 7 zumindest einen Greifrahmen 16 zum Blockieren einer Paternostereinrichtung 3 und zum Entnehmen bzw. Einlegen eines Transferträgers 11 aus einem Lagerregal 5 oder zum Entnehmen bzw. Einlegen eines Lagerregals 5 der blockierten Paternostereinrichtung 3. Mit dem Greifrahmen 16 werden somit bevorzugt trayförmige Probenträger, wie Lagerregale 5 und Transferträger 11 erfasst.

Die Umlagerstation 23 umfasst einen sogenannten "Puncher" 25, mit welchem Tubes 22 aus den Kompartimenten 26 eines Behälterracks 21 in Kompartimente 26 eines unterhalb des Behälterracks 21 angeordneten Arbeitsmagazins 24 gestossen werden können. In robotisierten Laboratorien sind, wie bereits erwähnt, sogenannte "Micro-Tube Cluster Racks" speziell bevorzugt, weil diese eine Standfläche aufweisen, welche dem sogenannten "Foot Print" einer Mikroplatte nach dem SBS-Standard entspricht. Die bereits genannte Firma Remp AG vertreibt ebenfalls Micro-Tube Cluster Racks mit 96 oder 384 Mikro-Röhrchen unter dem Handelsnahmen REMP Tube Technology^{TM}. Diese unterscheiden sich im Wesentlichen dadurch von den Racks und Mikro-Röhrchen aus dem übrigen Stand der Technik, dass das Bereitstellen der Proben-Röhrchen erfolgt, indem zumindest zwei Racks übereinander angeordnet werden und Probenröhrchen mit einen Manipulator aus dem obenliegenden Rack in entsprechend im Register positionierte Aufnahmekavitäten des untenliegenden Racks gestossen werden. Umgekehrt kann dieser Übergabeprozess aber auch dadurch erfolgen, dass Probenröhrchen mit einen Manipulator aus dem untenliegenden Rack in entsprechend positionierte Aufnahmekavitäten des obenliegenden Racks gestossen werden (vgl. z. B. EP 0 904 841 B1 oder US 6,827,907 B2).

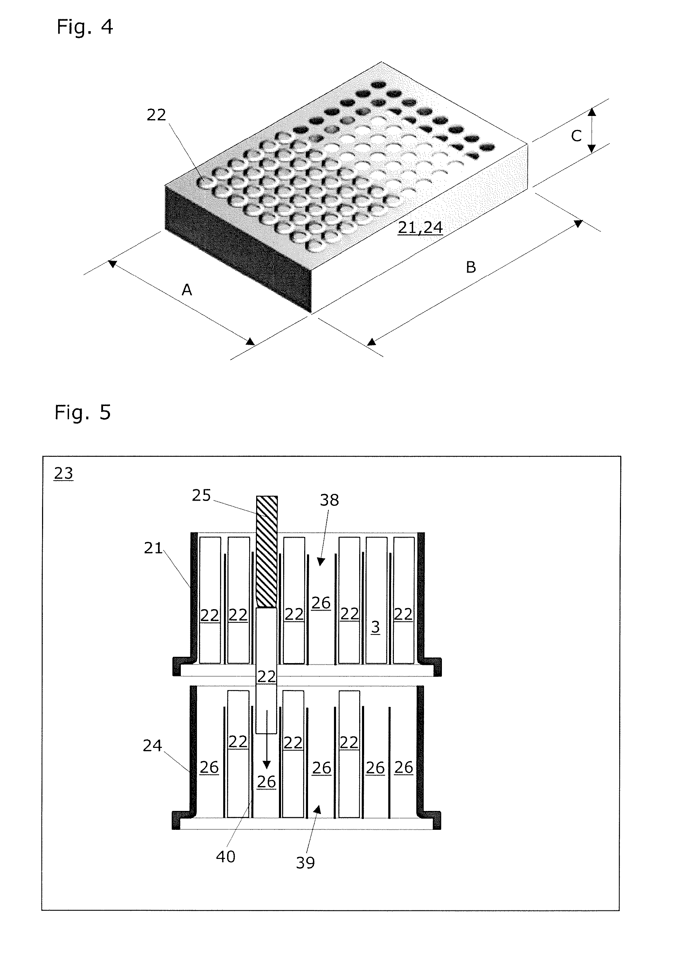

Hier wird nochmals auf die Figuren 4 und 5 hingewiesen, welche eine schematisierte 3D-Ansicht eines Lagermagazins bzw. Behälterracks 21 oder eines Arbeitsmagazins 24 bzw. einen vertikalen Schnitt durch eine Umlagerstation 23 zeigen. In der Umlagerstation 23 stösst ein Puncher einen Probenbehälter aus einem Kompartiment eines Behälterracks 21 in ein Kompartiment eines Arbeitsmagazins 24. Die Behälterracks 21 und Arbeitsmagazine 24 sind im wesentlichen gleich aufgebaut und unterscheiden sich vor allem durch die Verwendung. Behälterracks 21 werden zum Lagern und Bereitstellen von Behältern 17 oder Tubes 22 verwendet. Arbeitsmagazine 24 dagegen werden vom Roboter 7 oder von einem Operator verwendet und im Allgemeinen einem ausserhalb des Kompaktlagersystems 1 durchgeführten Bearbeitungs- oder Analyseprozess zugeführt. Die Behälterracks 21 weisen Trennwände 40 auf, welche eine Anzahl (bevorzugt 96 oder 384) Kompartimente 26 voneinander trennen. Diese Kompartimente weisen eine obere Öffnung 38 und eine untere Öffnung 39 auf, so dass Behälter (vorzugsweise in Form von verschlossenen Tubes 22) wahlweise von oben oder von unten in ein beliebiges Kompartiment eingesetzt werden können. Dieses Einsetzen wird vorzugsweise automatisiert mittels des Werkzeugs bzw. Punchers 25 ausgeführt. Die Behälterracks 21 bzw. Arbeitsmagazine 24 weisen bevorzugt eine Breite A und eine Länge B auf, die einen SBS Footprint definieren. Die Höhe C dieser Racks oder Magazine entspricht bevorzugt ebenfalls einer normierten Höhe von Mikroplatten. Alternativ zu den gezeigten Behälterracks 21 für Tubes 22 können Behälterracks, die vorzugsweise ebenfalls einen SBS Footprint aufweisen, zur Aufnahme von Gewebekassetten ausgebildet sein (nicht gezeigt). Solche alternativen Behälterracks weisen bevorzugt 24 Kompartimente zur Aufnahme von je einer auf einer Seitenfläche stehenden Gewebekassette auf und weisen vorzugsweise die doppelte Höhe einer Standardmikroplatte auf.

Der Roboter 7 ist vorzugsweise in einem Baurahmen 30 aufgebaut und mitsamt dem Greifrahmen 16, den Köpfen 18,19 und der Umlagerstation 23 aus dem Kompaktlagersystem 1 herausnehmbar ausgebildet. Dies ist insbesondere zu Servicezwecken besonders bevorzugt, weil dadurch der ganze Roboter aus dem Kompaktlagersystem 1 herausgenommen werden kann, ohne dass der Transferbereich 6 aufgetaut werden müsste. Somit bleibt auch der Lagerbereich 2 von einem Service am Roboter 7 unbehelligt, was insbesondere dann besonders günstig ist, wenn alle Paternostereinrichtungen 3 in einem gemeinsamen Lagerraum 13 stehen.

Das erfindungsgemässe Kompaktlagersystem 1 wird bevorzugt zum Ausführen eines entsprechenden Verfahrens zum Lagern und Bereitstellen von gefrorenen Proben verwendet. Bei diesem Verfahren werden in einem oben beschriebenen Kompaktlagersystem 1 die gefrorenen Proben in mindestens einer, im Lagerbereich 2 des Kompaktlagersystems 1 angeordneten und zumindest im wesentlichen vertikalen, Paternostereinrichtung 3 mit einer Längsachse 4 und einer Vielzahl von im wesentlichen horizontal ausgerichteten, auf einer im wesentlichen ovalen Bahn umlaufenden Lagerregalen 5 gelagert. Dabei entnimmt der mit einer Paternostereinrichtung 3 zusammenwirkende Roboter 7 ein Lagerregal 5 oder legt dieses ein. Der Roboter kann auch Gegenstände aus einem Lagerregal 5 nehmen bzw. in ein Lagerregal legen. Der Roboter kann diese Arbeiten aber nur dann ausführen, wenn zumindest ein Lagerregal 5 im Bereich des oberen Umlaufhalbkreises dieser Paternostereinrichtung 3 positioniert ist. Diese Gegenstände sind ausgewählt aus einer Gruppe, die Transferträger 11, Behälterracks 21 und Behälter 17 umfasst.

Insbesondere kann der Roboter 7 diese Arbeiten dann ausführen, wenn dieses Lagerregal 5 zumindest nahe am oberen Wendepunkt 12 positioniert ist. Dabei ist es unerheblich, aus welcher Richtung das Lagerregal 5 in diese Position bewegt wurde. Alternative dazu ist der Roboter 7 zum Entnehmen oder Einlegen eines Lagerregals 5 bzw. von Gegenständen aus einem bzw. in ein Lagerregal 5 ausgebildet und dazu befähigt ist, wenn zwei Lagerregale 5 vom oberen Wendepunkt 12 um jeweils im wesentlichen einen Viertel des oberen Umlaufhalbkreises entfernt positioniert sind.

Besonders effizient und zeitsparend kann das erfindungsgemässe Verfahren ausgeführt werden, wenn jeder Paternostereinrichtung 3 ein eigener Antriebsmotor zugeordnet ist. Dadurch kann jede Paternostereinrichtung unabhängig von den anderen Paternostereinrichtungen 3 bewegt werden. Dabei wird besonders bevorzugt, dass die Antriebsmotoren 54 aller Paternostereinrichtungen 3 von einem zentralen Rechner 60 angesteuert werden, um zumindest ein Lagerregal 5 einer Paternostereinrichtung 3 in eine für eine vorgesehene Ablage oder Entnahme von Proben günstige Position zu bringen, wobei zumindest ein Lagerregal 5 im Bereich des oberen Umlaufhalbkreises dieser Paternostereinrichtung 3 positioniert wird. Der ebenfalls vom zentralen Rechner 60 angesteuerte Roboter 7 legt dann eine vorgesehene Anzahl bestimmter Proben in die bereitgestellten Lagerregale 5 ab und/oder entnimmt diese Proben aus diesen Lagerregalen 5. Währen einer Verfahrzeit des Roboters 7 im Transferbereich 6 können die Paternostereinrichtungen 3 mit bereits bearbeiteten Lagerregalen in eine weitere Bearbeitungsposition gebracht werden. Dabei wird der Rechner 60 vorzugsweise die Verfahrwege des Roboters 7 und die Drehwege (und gegebenenfalls Drehrichtungen) der Paternostereinrichtungen 3 so miteinander abstimmen und optimieren, dass eine möglichst kurze Gesamtarbeitszeit für den Roboter 7 resultiert. Somit steuert der vorzugsweise zentrale Rechner 60, der innerhalb oder ausserhalb des Gehäuses 8 Kompaktlagersystems 1 angeordnet sein kann, den Roboter 7 und die Paternostereinrichtungen 3 einem zeitoptimierten Ablaufplan entsprechend. Wie beschrieben kann vorzugsweise jede Paternostereinrichtung 3 zum Positionieren eines bestimmten Lagerregals 5 zumindest nahe am obersten Wendepunkt 12 der Paternostereinrichtung 3, je nach der aktuellen Position des bestimmten Lagerregals 5, wahlweise vorwärts oder rückwärts in Umlauf gebracht werden.

Der Roboter 7 umfasst vorzugsweise eine Umlagerstation 23. In dieser erfolgt das Bereitstellen der Proben-Röhrchen, indem zumindest zwei Racks bzw. Magazine übereinander angeordnet werden und Probenröhrchen in der Form von Tubes 22 mit einen Werkzeug bzw. einem Manipulator 25 aus dem obenliegenden Behälterrack 21 in entsprechend im Register positionierte Aufnahmekavitäten des untenliegenden Arbeitsmagazins 24 gestossen werden. Umgekehrt kann dieser Übergabeprozess aber auch dadurch erfolgen, dass Tubes mit einem Manipulator aus dem untenliegenden Rack in entsprechend im Register positionierte Aufnahmekavitäten des obenliegenden Racks gestossen werden. Auch die Positionen von Behälterrack 21 und Arbeitsmagazin 24 können beliebig vertauscht werden, wobei der Roboter je nach Erfordernis auch zwei Behälterracks 21 oder zwei Arbeitsmagazine 24 bearbeiten kann.

Besonders bevorzugt wird im Hinblick auf eine zeitoptimierte Arbeitsweise des Roboters 7, dass der Roboter 7 zwei Köpfe 18,19 mit je einer Greiferzange 20 umfasst, mit welchen er im wesentlichen gleichzeitig zwei Behälterracks 21 mit Tubes 22 aus einem Lagerregal 5 oder aus einem Transferträger 11 ergreifen und zum Umverteilen dieser Tubes 22 in seiner Umlagerstation 23 bereitstellen kann. Mit der Ausstattung von zwei Greiferköpfen 18,19 halbiert sich die Arbeitszeit des Roboters für die reine Entnahme oder Ablage von Behältern 17 oder Behälterracks 21.

Wie beschrieben ist jede Paternostereinrichtung 3 vorzugsweise in einem Gerüst 27 aufgebaut und zusammen mit diesem Gerüst 27 seitlich durch eine Öffnung 28 aus dem Gehäuse 8 des Kompaktlagersystems 1 zu Servicezwecken herausziehbar. Dies ist insbesondere in der zweiten Ausführungsform des Kompaktlagersystems 1 von Vorteil, weil eine einzelne Paternostereinrichtung 3 aus dem Gehäuse 8 entfernt werden kann, ohne dass die anderen, sich in individuellen Lagerräumen 13 befindenden Paternostereinrichtungen 3 (vgl. Fig. 3) in ihrer Temperatur oder Funktionsweise beeinträchtigt würden.

Die zu entfernende Paternostereinrichtung 3 kann vorher mit dem Roboter 7 entleert werden. Dies ist insbesondere dann angezeigt, wenn ein Unterhalts- oder Reparaturservice an der Paternostereinrichtung 3 oder am entsprechenden Lagerraum 13 ausgeführt werden soll.

Es ist aber auch möglich, die entfernte Paternostereinrichtung 3 mitsamt allen darin gelagerten, gefrorenen Proben in eine andere Kühleinrichtung oder gar in ein anderes Kompaktlagersystem 1 einzuschieben. Dabei kann diese andere Kühleinrichtung eine stationäre oder transportable Kühleinrichtung sein.

Sofern Merkmale der vorgestellten Varianten der Paternostereinrichtungen 5 und der Ausführungsformen des Kompaktlagersystems 1 kombiniert werden können, gehören solche Kombinationen zum Umfang der vorliegenden Erfindung. Gleiche Bezugszeichen in den Figuren betreffen identische Merkmale, auch wenn diese nicht in jedem Fall ausdrücklich beschrieben wurden.

Das Problem der eindeutigen Identifikation der in diesem Kompaktlagersystem 1 eingelagerten Proben wird bevorzugt dadurch gelöst, dass alle transportierbaren Teile des Kompaktlagersystems mit einem Identifikationsmittel versehen werden. Diese transportierbaren Teile umfassen insbesondere Lagerregale 5, Transferträger 11, Behälter oder Vials 17, Behälterracks 21, Tubes 22 und Arbeitsmagazine 14. Zudem vereinfacht der SBS-Standard in der Nummerierung der Kompartimente 26 mit der Bezeichnung in Reihen und Kolonnen das Lokalisieren eines bestimmten Tubes 22. Als Identifikationsmittel sind alle gängigen Identifikationsmittel verwendbar, vorausgesetzt sie halten den tiefen Lagertemperaturen stand. Somit kommen insbesondere optisch ablesbare Identifikationen wie (1-, 2-, oder 3-dimensionale) Barcodes oder drahtlos und ohne Sichtkontakt ablesbare Identifikationen, beispielsweise mittels Radiofrequenzetiketten (oder "RFID-tags") in Frage. Andere drahtlose Systeme, wie RuBee, ZIGBee, oder Bluetooth werden je nach Eignung ebenfalls bevorzugt. Besonders bevorzugt ist die Identifikation der grösseren transportierbaren Teile, wie beispielsweise der Lagerregale 5, Transferträger 11, Behälter oder Vials 17 und Behälterracks 21 mittels eines 1-dimensionalen Bar- oder Strichcodes. Kleinere transportierbare Teile, wie Tubes 22 werden bevorzugt mit einem 2-dimensionalen Barcode versehen (nicht gezeigt).

Bevorzugt ist der Roboter 7 mit einem Identifikations-Lesegerät wie z.B. einen Barcode-Reader ausgerüstet, so dass er die entsprechenden Identifikationsmittel der aufzunehmenden, der zu transportierenden, der abzusetzenden oder der abgesetzten Teile des Kompaktlagersystems lesen kann (nicht gezeigt). Es kann aber auch vorgesehen sein, dass eine zentrale Vorrichtung jeder einzelnen Paternostereinrichtung 3 und/oder des ganzen Kompaktlagersystems 1 den Identifikationsprozess der einzelnen transportierbaren Teile übernimmt oder zumindest den Roboter 7 bei bestimmten Identifikationsaufträgen unterstützt. Speziell bevorzugt ist, dass der Rechner 60 die Identifikationen überwacht und speichert, so dass Lagerlisten und Transferlisten angezeigt und/oder ausgedruckt werden können. Insbesondere bei einem automatisierten Laden von Proben, das bevorzugt über eine Schleuse 33 geschieht, ist das feststellen der Identität und der zugewiesenen Lagerplätze der einzelnen Proben oder anderer transportierbare Teile von grosser Bedeutung. Dank einem solchen Identifikationssystem kann jederzeit ein genaues Inventar vom Rechner 60 abgerufen werden.

### Bezugszeichen:

| | | | |
|---|---|---|---|
| 1 | Kompaktlagersystem | 32 | Hauptkettentrieb |
| 2 | Lagerbereich | 33 | Schleuse |
| 3 | Paternostereinrichtung | 34 | Kettenräder |
| 4 | Längsachse | 35 | Welle |
| 5 | Lagerregal | 36 | Kurvenscheibe |
| 6 | Transferbereich | 37 | Regalträger |
| 7 | Roboter | 38 | obere Öffnung |
| 8 | Gehäuse | 39 | untere Öffnung |
| 9 | Wärmeisolation | 40 | Trennwand |
| 10 | Kühlaggregat | 41 | axiales Versatzmass |
| 11 | Transferträger | 42 | seitliches Versatzmass |
| 12 | Wendepunkt | 43 | Seitenkettentrieb |
| 13 | Lagerräume | 44 | Blindträger |
| 14 | Zwischenwände | 45 | Kurvenschiene |
| 15 | Ladeluke | 46 | Verbindung |
| 16 | Greifrahmen | 47 | Längsteil |
| 17 | Behälter, Vial | 48 | Querschenkel |
| 18 | erster Kopf | 49 | Hülsen |
| 19 | zweiter Kopf | 50 | Rollen |
| 20 | Greiferzange | 51 | umlaufende Stege |
| 21 | Behälterrack | 52 | angeformte Stützen |
| 22 | Tubes | 53 | Leitschienen |
| 23 | Umlagerstation | 54 | Antriebsmotor |
| 24 | Arbeitsmagazine | 55 | Drehdurchführung |
| 25 | Puncher, Manipulator | 56 | Antriebszahnrad |
| 26 | Kompartiment | 57 | Zwischenzahnrad |
| 27 | Gerüst | 58 | Kurvenbügel |
| 28 | Öffnung | 59 | Antriebszahnrad |
| 29 | Deckel | 60 | Rechner |
| 30 | Baurahmen | 61 | Stützkette |
| 31 | Stirnseiten | | |

## Patentansprüche

1. Kompaktlagersystem (1) mit einem Lagerbereich (2), mit einem eine Wärmeisolation (9) umfassenden Gehäuse (8) sowie mit zumindest einem Kühlaggregat (10), mit welchem zumindest der Lagerbereich (2) auf eine Temperatur kühlbar ist, die unterhalb von -15°C liegt, wobei das Kompaktlagersystem (1) vollständig innerhalb des gekühlten Lagerbereichs (2) angeordnete Lagerregale (5) und einen oberhalb dieses Lagerbereichs (2) angeordneten Transferbereich (6) umfasst, in welchem ein Roboter (7) im wesentlichen horizontal beweglich angeordnet ist, **dadurch gekennzeichnet, dass** das Kompaktlagersystem (1) mindestens eine, im Lagerbereich (2) angeordnete und zumindest im wesentlichen vertikale Paternostereinrichtung (3) umfasst, welche eine Längsachse (4) und eine Vielzahl von im wesentlichen horizontal ausgerichteten, auf einer im wesentlichen ovalen Bahn umlaufenden Lagerregalen (5) umfasst, wobei der mit einer Paternostereinrichtung (3) zusammenwirkende Roboter (7) zum Entnehmen oder Einlegen eines Lagerregals (5) bzw. von Gegenständen aus einem bzw. in ein Lagerregal (5) ausgebildet und dazu befähigt ist, wenn zumindest ein Lagerregal (5) im Bereich des oberen Umlaufhalbkreises dieser Paternostereinrichtung (3) positioniert ist, wobei diese Gegenstände ausgewählt sind aus einer Gruppe, die Transferträger (11), Behälterracks (21) und Behälter (17) umfasst.

2. Kompaktlagersystem (1) nach Anspruch 1, **dadurch gekennzeichnet, dass** der Roboter (7) zum Entnehmen oder Einlegen eines Lagerregals (5) bzw. von Gegenständen aus einem bzw. in ein Lagerregal (5) ausgebildet und dazu befähigt ist, wenn dieses Lagerregal (5) zumindest nahe am oberen Wendepunkt (12) positioniert ist.

3. Kompaktlagersystem (1) nach Anspruch 1, **dadurch gekennzeichnet, dass** der Roboter (7) zum Entnehmen oder Einlegen eines Lagerregals (5) bzw. von Gegenständen aus einem bzw. in ein Lagerregal (5) ausgebildet und dazu befähigt ist, wenn zwei Lagerregale (5) vom oberen Wendepunkt (12) um jeweils im wesentlichen einen Viertel des oberen Umlaufhalbkreises entfernt positioniert sind.

4. Kompaktlagersystem (1) nach einem der vorhergehenden Ansprüche, **dadurch gekennzeichnet, dass** der Lagerbereich (2) zwei oder mehr im wesentlichen parallel nebeneinander angeordnete Paternostereinrichtungen (3) umfasst, wobei der Roboter (7) quer zu den Längsachsen (4) dieser Paternostereinrichtungen (3) verfahrbar ausgebildet ist.

5. Kompaktlagersystem (1) nach einem der vorhergehenden Ansprüche, **dadurch gekennzeichnet, dass** der Lagerbereich (2) Lagerräume (13) umfasst, die voneinander durch wärmeisolierte Zwischenwände (14) getrennt sind, wobei in jedem Lagerraum (13) je eine Paternostereinrichtung (3) angeordnet ist.

6. Kompaktlagersystem (1) nach Anspruch 5, **dadurch gekennzeichnet, dass** jeder Lagerraum (13) zumindest eine verschliessbare Ladeluke (15) umfasst.

7. Kompaktlagersystem (1) nach einem der vorhergehenden Ansprüche, **dadurch gekennzeichnet, dass** der Lagerbereich (2) auf eine Temperatur kühlbar ist, die bei -35°C oder darunter liegt, und dass der Transferbereich (6) auf eine Temperatur kühlbar ist, die unterhalb von -15°C liegt.

8. Kompaktlagersystem (1) nach Anspruch 7, **dadurch gekennzeichnet, dass** der Lagerbereich (2) auf eine Temperatur kühlbar ist, die bei -80°C liegt, und dass der Transferbereich (6) auf eine Temperatur kühlbar ist, die bei -20°C liegt.

9. Kompaktlagersystem (1) nach einem der vorhergehenden Ansprüche, **dadurch gekennzeichnet, dass** der Roboter (7) zumindest einen Greifrahmen (16) zum Blockieren einer Paternostereinrichtung (3) und zum Entnehmen bzw. Einlegen eines Transferträgers (11) aus einem Lagerregal (5) oder zum Entnehmen bzw. Einlegen eines Lagerregals (5) der blockierten Paternostereinrichtung (3) umfasst.

10. Kompaktlagersystem (1) nach einem der vorhergehenden Ansprüche, **dadurch gekennzeichnet, dass** der Roboter (7) einen oder zwei Köpfe (18,19) mit je einer Greiferzange (20) zum Greifen von Behälterracks (21) mit Probenbehältern (17,22) bzw. zum Greifen von in Behälterracks (21) oder in Transferträgern (11) angeordneten Probenbehältern (17) umfasst.

11. Kompaktlagersystem (1) nach Anspruch 10, **dadurch gekennzeichnet, dass** der Roboter (7) eine Umlagerstation (23) mit einem Puncher (25) zum Umverteilen dieser Probenbehälter (17,22) in Arbeitsmagazine (24) umfasst, wobei dieser Puncher (25) zum Stossen von Tubes (22) aus Kompartimenten (26) eines Behälterracks (21) in Kompartimente (26) eines unterhalb oder oberhalb dieses Behälterracks (21) angeordneten Arbeitsmagazins (24) ausgebildet ist.

12. Kompaktlagersystem (1) nach einem der Ansprüche 5 bis 11, **dadurch gekennzeichnet, dass** jede Paternostereinrichtung (3) in einem Gerüst (27) aufgebaut und zusammen mit diesem Gerüst (27) seitlich durch eine Öffnung (28) aus dem Gehäuse (8) des Kompaktlagersystems (1) herausziehbar ausgebildet ist, wobei diese Öffnung (28) bei eingeschobener Paternostereinrichtung (3) mit einem mit einer Wärmeisolation (9) ausgerüsteten Deckel (29) verschlossen ist.

13. Kompaktlagersystem (1) nach einem der vorhergehenden Ansprüche, **dadurch gekennzeichnet, dass** jede Paternostereinrichtung (3) zwei an deren beiden Stirnseiten (31) angeordnete, im wesentlichen vertikale Hauptkettentriebe (32) mit Rollenketten umfasst, die um untere und obere Kettenräder (34) laufen und die über zumindest eine Welle (35) mechanisch miteinander verbunden sind, wobei benachbarte Kettenglieder mittels als Regalträger (37) ausgebildeten Laschen miteinander verbunden sind.

14. Kompaktlagersystem (1) nach Anspruch 13, **dadurch gekennzeichnet, dass** jede Paternostereinrichtung (3) einen an deren einen Stirnseite (31) angeordneten, im wesentlichen vertikalen Seitenkettentrieb (43) mit Rollenketten umfasst, die um untere und obere Kettenräder (34) laufen und gegenüber dem Hauptkettentrieb (32) um ein axiales Versatzmass (41) und um ein seitliches Versatzmass (42) versetzt sind, wobei benachbarte Kettenglieder mittels als Blindträger (44) ausgebildete Laschen miteinander verbunden sind.

15. Kompaktlagersystem (1) nach Anspruch 13 oder 14, **dadurch gekennzeichnet, dass** diese Regalträger (37) oder diese Blindträger (44) von den jeweiligen Kettenbolzen durchstossen sind.

16. Kompaktlagersystem (1) nach den Ansprüchen 13 und 14, **dadurch gekennzeichnet, dass** jeder Regalträger (37) über eine das axiale Versatzmass (41) und das seitliche Versatzmass (42) überbrückende, in sich steife Verbindung (46) mit einem Blindträger (44) gelenkig verbunden ist.

17. Kompaktlagersystem (1) nach Anspruch 13, **dadurch gekennzeichnet, dass** jede Paternostereinrichtung (3) eine an deren einen Stirnseite (31) angeordnete, im wesentlichen vertikale Kurvenscheibe (36) mit einer Kurvenschiene (45) und Kurvenbügel (58) umfasst, wobei jeder Kurvenbügel einem ein Lagerregal (5) tragenden Regalträger (37) zugeordnet, in sich formstabil und mit diesem Regalträger (37) gelenkig verbunden ist.

18. Verfahren zum Lagern und Bereitstellen von gefrorenen Proben in einem Kompaktlagersystem (1), insbesondere nach einem der vorhergehenden Ansprüche, mit einem Lagerbereich (2), mit einem eine Wärmeisolation (9) umfassenden Gehäuse (8) sowie mit zumindest einem Kühlaggregat (10), mit welchem zumindest der Lagerbereich (2) auf eine Temperatur kühlbar ist, die unterhalb von -15°C liegt, wobei das Kompaktlagersystem (1) vollständig innerhalb des gekühlten Lagerbereichs (2) angeordnete Lagerregale (5) und einen oberhalb dieses Lagerbereichs (2) angeordneten Transferbereich (6) umfasst, in welchem ein Roboter (7) im wesentlichen horizontal beweglich angeordnet ist, **dadurch gekennzeichnet, dass** die gefrorenen Proben in mindestens einer, im Lagerbereich (2) des Kompaktlagersystems (1) angeordneten und zumindest im wesentlichen vertikalen, Paternostereinrichtung (3) mit einer Längsachse (4) und einer Vielzahl von im wesentlichen horizontal ausgerichteten, auf einer im wesentlichen ovalen Bahn umlaufenden Lagerregalen (5) gelagert oder daraus bereitgestellt werden, wobei der mit einer Paternostereinrichtung (3) zusammenwirkende Roboter (7) ein Lagerregal (5) entnimmt oder einlegt bzw. Gegenstände aus einem Lagerregal (5) nimmt bzw. in ein Lagerregal legt, wenn zumindest ein Lagerregal (5) im Bereich des oberen Umlaufhalbkreises dieser Paternostereinrichtung (3) positioniert ist, wobei diese Gegenstände ausgewählt sind aus einer Gruppe, die Transferträger (11), Behälterracks (21) und Behälter (17) umfasst.

19. Verfahren gemäss Anspruch 18, **dadurch gekennzeichnet, dass** jeder Paternostereinrichtung (3) ein eigener Antriebsmotor (54) zugeordnet ist, wodurch jede Paternostereinrichtung (3) unabhängig von den anderen Paternostereinrichtungen (3) bewegt werden kann.

20. Verfahren gemäss Anspruch 19, **dadurch gekennzeichnet, dass** die Antriebsmotoren (54) aller Paternostereinrichtungen (3) von einem zentralen Rechner (60) angesteuert werden, um zumindest ein Lagerregal (5) einer Paternostereinrichtung (3) in eine für eine vorgesehene Ablage oder Entnahme von Proben günstige Position zu bringen, wobei zumindest ein Lagerregal (5) im Bereich des oberen Umlaufhalbkreises dieser Paternostereinrichtung (3) positioniert wird.

21. Verfahren gemäss Anspruch 20, **dadurch gekennzeichnet, dass** der ebenfalls vom zentralen Rechner (60) angesteuerte Roboter (7) eine vorgesehene Anzahl bestimmter Proben in die bereitgestellten Lagerregale (5) ablegt und/oder aus diesen entnimmt.

22. Verfahren gemäss den Ansprüchen 20 und 21, **dadurch gekennzeichnet, dass** der zentrale Rechner (60) den Roboter (7) und die Paternostereinrichtungen (3) einem zeitoptimierten Ablaufplan entsprechend steuert.
